# EUROPÄISCHE PATENTANMELDUNG

(11) **EP 0 970 736 A2**
(43) Veröffentlichungstag der Anmeldung: **12.01.2000**
(21) Anmeldenummer: 98250399.7
(22) Anmeldetag: 16.11.1998
(51) Int. Cl.: B01D 29/15, B01D 29/64, B01D 29/66, B01D 29/70

(54) **Rückspülbarer Filter für Flüssigkeiten**

(30) Priorität: 08.07.1998 DE 19830412
(71) Anmelder: EWT Wassertechnik GmbH, 98574 Schmalkalden (DE)
(72) Erfinder: Ell, Edwin, 77833 Ottersweier (DE)
(74) Vertreter: Pletat, Hans Günter

(57) **Zusammenfassung**

Bei einem rückspülbaren Filter für Flüssigkeiten mit einem stehenden kreiszylindrischen Filtergehäuse (1), in dessen Zentrum eine um ihre Achse drehbare Filterkerze (2) angeordnet ist, einem Deckel (3), der über ein Absperrventil einen Permeatzufluß aufweist, einem Trichter (4), an dessen unterer Seite über ein Absperrventil eine Schmutzabflußleitung angeschlossen ist sowie über ein Absperrventil ein Filtratabfluß, der mit der Filterkerze dichtend gelagert ist und einem Reinigungsteil zur Reinigung der Filterkerze soll die Durchgangsleistung bei gleichzeitigem Einsatz einer Filterkerze mit einer Porengröße < 0,2µm erhöht werden. Das wird dadurch realisiert, daß in einem Abstand vom Deckel (3) an der Innenseite des kreiszylindrischen Filtergehäuses in den Trichter (4) hineinragend in Richtung zur Rotationsachse der Filterkerze ein oder mehrere Beruhigungssegmente (5) senkrecht oder spiralförmig in einem Winkel α von 0 bis 30 Grad in Drehrichtung der Filterkerze (2) angeordnet sind, wobei sich an den Beruhigungssegmenten (5) in Höhe der Filterkerze (2) zylindrische, konische oder noppenförmige Abstreifelemente (6) befinden, die formschlüssig nachstellbar oder selbstspannend mit diesen verbunden sind und diese Abstreifelemente (6) beabstandet zur Oberfläche der Filterkerze (2) angeordnet sind.

## Beschreibung

Die vorliegende Erfindung bezieht sich auf einen Filter für verunreinigte Flüssigkeiten, insbesondere für Flüssigkeiten durchsetzt mit Partikeln von softigem Charakter, bestehend aus einem stehenden kreiszylindrischen Filtergehäuse, in dessen Zentrum eine um ihre Achse drehbare Filterkerze angeordnet ist, einem Deckel, der über ein Absperrventil einen Permeatzufluß aufweist, einem Trichter, an dessen unterer Seite über ein Absperrventil ein Filtratabfluß, der mit der Filterkerze dichtend gelagert ist und einem Reinigungsteil zur Reinigung der Filterkerze versehen ist.

Bekannte Filter dieser Art, wie beispielsweise in der EP-PS 0378516 beschriebenen Filtereinrichtung, säubern den Filter mit Reinigungsbürsten, welche sich in axialer Richtung erstrecken und entlang der Oberfläche der Filterkerze am Umfang verteilt in dem Filtergehäuse angeordnet sind. Beim Säuberungsvorgang dringen diese Bürsten in die Poren des Filters und lösen so den Filterkuchen von der Filteroberfläche

Der in der DE-PS 4222495 beschriebene Flüssigkeitsfilter wird zweistufig abgereinigt.

Zunächst wird die Oberfläche der Filterkerze mit einem federnd vorgelagerten Abstreifer vom groben Oberflächenschmutz gereinigt, die restliche an der Filterkerze festsitzende Verunreinigung gelangt danach mittels Rückspülflüssigkeit in die Schmutzabflußleitung.

Alle diese Filter besitzen den Nachteil, daß infolge der mechanischen Abreinigung des Filterkuchens Konzentratanteile in die Poren der Filterkerze eingepreßt werden. Der lange Rückspülzyklus zur nachfolgenden Nachreinigung dieser Poren hat einen hohen Filtratverlust zur Folge und begrenzt somit die Durchlaßleistung dieser Flüssigkeitsfilter.

Eine Steigerung der Durchlaßleistung ist nur durch Parallelschaltung von mehreren Flüssigkeitsfiltern möglich, was einen entsprechend hohen Raum benötigt. Ein weiterer Nachteil dieser Filtersysteme ist, daß bei Filterporengrößen unter 0,5 µm diese, infolge des sehr hohen Rückspülaufwandes, nicht mehr effektiv arbeiten.

Aufgabe der Erfindung ist es daher, einen rückspülbaren Filter für Flüssigkeiten zu entwickeln, der eine gesteigerte Durchlaßleistung bei geringem Raumbedarf sowie den Einsatz von Filterkerzen mit einer Porengröße < 0,2 µm ermöglicht.

Diese Aufgabe wird dadurch gelöst, daß in einem Abstand vom Deckel an der Innenseite des kreiszylindrischen Filtergehäuses in den Trichter hineinragend in Richtung zur Rotationsachse der Filterkerze ein oder mehrere Beruhigungssegmente senkrecht oder spiralförmig in einem Winkel α von 0 bis 30 Grad in Drehrichtung der Filterkerze angeordnet sind, wobei an den Beruhigungssegmenten in Höhe der Filterkerze zylindrische, konische oder noppenförmige Abstreifelemente befinden, die formschlüssig nachstellbar oder selbstspannend mit diesen verbunden und diese Abstreifelemente beabstandet zur Oberfläche der Filterkerze angeordnet sind.

Das berührungslose entfernen des Filterkuchens mittels der zur Filterkerze beabstandeten Abstreifelemente verhindert ein Einpressen von Konzentratanteilen in die Poren der Filterkerze. Der abgelöste Filterkuchen kann zwischen den Beruhigungssegmenten sehr schnell in den Trichter absinken, was durch die spiralförmige Anordnung der Beruhigungselemente noch begünstigt wird. Dadurch minimiert sich der Rückspülzyklus zum Abreinigen der Filterkerze sowie die zur Rückspülung benötigte Filtratmenge Diese vorteilhafte Ausgestaltung ist Grundlage für den effektiven Einsatz von Filterkerzen mit einer Porengröße < 0,2 µm.

Die Erfindung wird nachfolgend in einem Ausführungsbeispiel näher dargestellt.

Es zeigt:

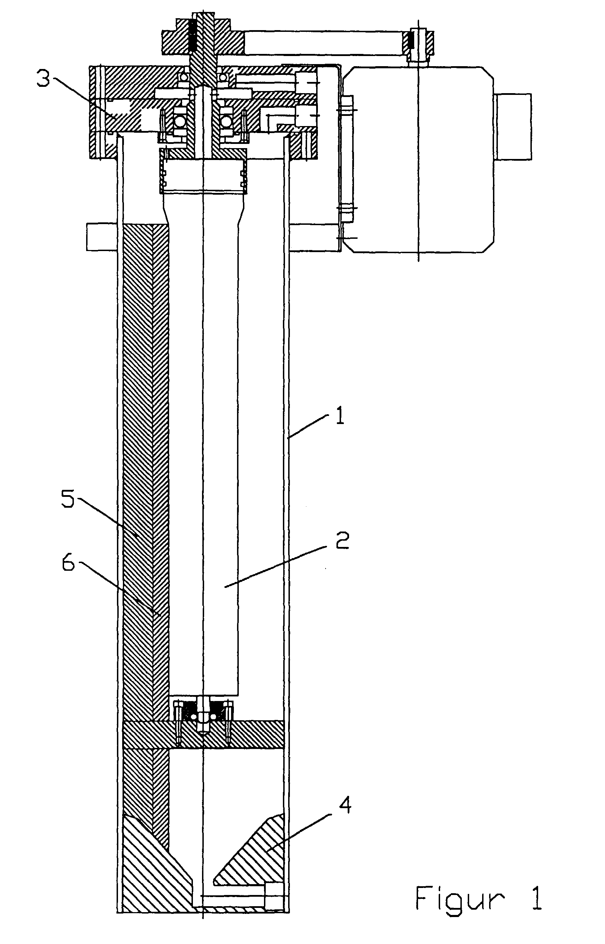

- **Fig. 1**: die senkrechte Anordnung dreier Beruhigungssegmente mit Abstreifelementen im rückspülbaren Filter,

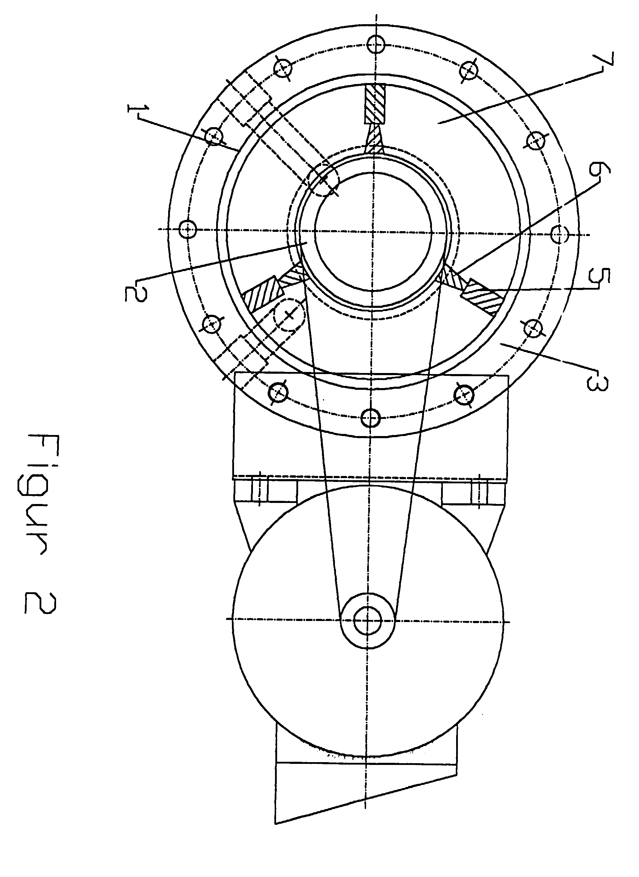

- **Fig. 2**: die Draufsicht von Fig. 1

Beim Filtrieren verschmutzter Flüssigkeiten, z.B. in der Reinigungswasseraufbereitung, Trinkwasseraufbereitung, bei Getränkeautomaten, in Bäckereien sowie in der Fleisch- und Fischverarbeitung, ist es Aufgabe eines Filters, Schmutzteilchen ab einer bestimmten Größe aus der Flüssigkeit herauszufiltern. Die Größe der herauszufilternden Schmutzteilchen hängt im wesentlichen von der Porengröße des Filters ab. Je kleiner die Porengröße, je schneller setzen diese sich zu und je öfter muß der Filter gereinigt werden.

Während der Filterzyklus im wesentlichen nicht beeinflußbar scheint ist der Abreinigungszyklus der Filterkerze technisch gestaltbar.

Drei um je 120 Grad versetzt an der Innenwand des kreiszylindrischen Filtergehäuses 1 angeordnete und bis in den Trichter 4 hineinreichenden Beruhigungssegmente 5 unterteilen den Permeatraum der Filtereinrichtung in drei gleichgroße Beruhigungskammern 7. Ein 10 bis 20 mm großer Abstand zwischen den Beruhigungssegmenten 5 und dem Deckel 3 gewährleistet die gleichmäßige Permeatzufuhr zu den Beruhigungskammern 7. Diese bewirken, daß während des Filtervorganges das Konzentrat wirbelfrei und linear zur Filterkerze 2 transportiert wird und sich an dieser absetzt, wobei größere Partikel sich bereits beim Filtern in den Trichter 4 absetzen. Dieses Konzentrat bildet auf der Filterkerzenoberfläche eine homogene feste Schicht von Filterkuchen. Die Abreinigung der Filterkerze 2 erfolgt dadurch, daß im Filtratraum ein definierter Überdruck erzeugt wird. Dieser Überdruck löst den Filterkuchen ca. 1 bis 2 mm kompakt von der Filterkerze. Durch Drehung dieser wird der Filterkuchen großvolumig mittels den an den Beruhigungssegmenten 5 angeordneten Abstreifelementen 6 abgelöst und sinkt innerhalb der Beruhigungskammern 7 sehr schnell in den Trichter 4. Die vorteilhafte spiralförmige Anordnung der Beruhigungssegment 5 in einem Winkel α von 0 bis 30 Grad begünstigt das Ablösen und rasche Absenken des abgelösten Filterkuchens. Da die Abstreifelemente 6 berührungslos zur Filteroberfläche angeordnet sind, kann kein Konzentrat in die Poren der Filterkerze eingepresst werden. Diese berührungslose Anordnung bedingt außerdem, daß die Abstreifelemente keinem Verschleiß unterliegen und somit dieser rückspülbare Filter als wartungsfrei angesehen werden kann.

## Patentansprüche

1. Rückspülbarer Filter für Flüssigkeiten mit einem stehenden kreiszylindrischen Filtergehäuse, in dessen Zentrum eine um ihre Achse drehbare Filterkerze angeordnet ist, einem Deckel, der über ein Absperrventil einen Permeatzufluß aufweist, einem Trichter, an dessen unterer Seite über ein Absperrventil eine Schmutzabflußleitung angeschlossen ist, sowie über ein Absperrventil ein Filtratabfluß, der mit der Filterkerze dichtend gelagen ist und einem Reinigungsteil zur Reinigung der Filterkerze dadurch gekennzeichnet, daß in einem Abstand vom Deckel (3) an der Innenseite des kreiszylindrischen Filtergehäuses (1) in den Trichter (4) hineinragend in Richtung zur Rotationsachse der Filterkerze (2) ein oder mehrere Beruhigungssegmente (5) senkrecht oder spiralförmig in einem Winkel α von 0 bis 30 Grad in Drehrichtung der Filterkerze (2) angeordnet sind, wobei sich an den Beruhigungssegmenten (5) in Höhe der Filterkerze (2) zylindrische, konische oder noppenförmige Abstreifelemente (6) befinden, die formschlüssig nachstellbar oder selbstspannend mit diesen verbunden sind und diese Abstreifelemente (6) beabstandet zur Oberfläche der Filterkerze (2) angeordnet sind.
